# EUROPEAN PATENT APPLICATION

(11) **EP 4 681 577 A1**
(43) Date of publication of application: **21.01.2026**
(21) Application number: 24814032.9
(22) Date of filing: 24.04.2024
(51) Int. Cl.: A47B 9/00, A47B 13/02, A47B 21/06

(54) **ELECTRIC HEIGHT-ADJUSTABLE TABLE**

(30) Priority: 02.06.2023 CN 202321400507 U
(71) Applicant: Ningbo Healthkey Motion Technology Co., Ltd, Ningbo, Zhejiang 315324 (CN)
(72) Inventor: YE, Dongtong, Ningbo, Zhejiang 315324 (CN); CHENG, Zhen, Ningbo, Zhejiang 315324 (CN); ZHANG, Meng, Ningbo, Zhejiang 315324 (CN); GONG, Dixin, Ningbo, Zhejiang 315324 (CN); LIU, Jian, Ningbo, Zhejiang 315324 (CN); WU, Haiyang, Ningbo, Zhejiang 315324 (CN)
(74) Representative: karo IP
(86) International application number: PCT/CN2024/089479
(87) International publication number: WO 2024/244826

(57) **Abstract**

An electric height-adjustable desk, which relates to a desk technology and can realize quick assembly/disassembly of the electric height-adjustable desk at a lower cost; the electric height-adjustable desk as disclosed includes: a desktop, a desk frame including a frame and two electric columns, the frame including a main beam and an auxiliary beam, the two electric columns being connected to two ends of the main beam, respectively, the auxiliary beam being connected between the main beam and the desktop; a male part is provided on each electric column, and a female part insertion-fitted with the male part is provided on the main beam, the male part being insertion-fitted with the female part to connect the electric column to the main beam; and the auxiliary beam is movable relative to the main beam, the auxiliary beam being configured to lock the male part and/or the female part to an insertion-fit state.

## Description

### FIELD

The present invention relates to a desk, and more particularly relates to an electric height-adjustable desk.

### BACKGROUND

Electric height-adjustable desks are becoming increasingly popular with improvement of quality of life. An electric height-adjustable desk comprises a desktop and a desk frame, the desk frame comprising a frame and two legs, the legs being extendable/retractable to control a height position of the desktop desired by a user, the frame being connected between the two legs and configurable to maintain a constant distance therebetween while preventing the desktop from being deformed under a stress exerted by a heavy object placed thereon. Fasteners are generally adopted in assembly of the desk frame and assembly between the desk frame and the desktop, which increases difficulty in assembly/disassembly. To facilitate a user's autonomous assembly/disassembly, an existing electric height-adjustable desk usually has a quick assembly/disassembly feature with a locking part, the locking part being configured to lock the connecting portions of the legs and the frame that are assembled via a quick assembly structure so as to maintain a secure fit between the legs and the frame. However, adding the locking part increases the number of parts in the electric height-adjustable desk, which requires an additional production line as well as auxiliary manufacturing equipment such as a mold to produce this part, thereby increasing manufacturing costs.

### SUMMARY

To at least overcome the drawbacks in conventional technologies, the present invention provides an electric height-adjustable desk, which can realize quick assembly/disassembly of the electric height-adjustable desk at a lower cost.

The present invention offers a technical solution set forth below:
An electric height-adjustable desk, comprising:
   a desktop;
   a desk frame comprising a frame and two electric columns, the frame comprising a main beam and an auxiliary beam, the two electric columns being connected to two ends of the main beam, respectively, the auxiliary beam being connected between the main beam and the desktop;
   wherein:
      a male part is provided on each electric column, and a female part insertion-fitted with the male part is provided on the main beam, the male part being insertion-fitted with the female part to connect the electric column to the main beam; and the auxiliary beam is movable relative to the main beam, the auxiliary beam being configured to lock the male part and/or the female part to an insertion-fit state.

Based on the solution noted *supra,* the auxiliary beam exerts a force against the male part and/or the female part to maintain the insertion-fit state therebetween.

Based on the solution noted *supra,* the auxiliary beam exerts a force against the male part and/or the female part in a direction perpendicular to a direction of insertion fit between the male part and the female part to create fricative damping at an overlap portion therebetween.

Based on the solution noted *supra,* the male part is provided on an end portion of the electric column facing a rear side of the desktop, the male part and the female part being mated in a front-rear direction of the desktop; and the auxiliary beam exerts a force against the male part and/or the female part in a length direction of the main beam.

Based on the solution noted *supra,* the male part is provided on an end portion of the electric column facing a rear side of the desktop, the male part and the female part being mated in a front-rear direction of the desktop, the male part being an insert block, the female part being a slot, a size of the slot in a length direction of the main beam being greater than a size of the insert block; a check block is provided on the insert block, and a check recess fitted with the check block in the length direction of the main beam is provided on an inner wall of the slot; and the auxiliary beam exerts a force against the male part and/or the female part in the length direction of the main beam to maintain a fitted state between the check block and the check recess.

Based on the solution noted *supra,* the auxiliary beam is rotatably connected to the main beam, the auxiliary beam rotating to switch between a lock position where the auxiliary beam exerts a force against the male part and/or the female part and a release position where the force is released.

Based on the solution noted *supra,* a protrusion part is provided on the auxiliary beam, and when the auxiliary beam is disposed at the lock position, the force is exerted via the protrusion part against the male part and/or the female part to maintain an insertion-fit state therebetween.

Based on the solution noted *supra,* a cam structure is further provided on the auxiliary beam, the cam structure being centered around a rotating center of the auxiliary beam, the protrusion part being formed by the cam structure.

Based on the solution noted *supra,* when the auxiliary beam is disposed at the release position, the auxiliary beam is retracted on the main beam in the length direction of the main beam.

Based on the solution noted *supra,* the auxiliary beam comprises a first beam body arranged along the underside of the desktop and a second beam body extending from a side edge of the first beam body along a height direction; and when the auxiliary beam is disposed at the release position, the first beam body being at least partially projected on the main beam.

Based on the solution noted *supra,* when the auxiliary beam is disposed at the lock position, the auxiliary beam is locked to the electric column.

Based on the solution noted *supra,* one of the electric column and the auxiliary beam is provided with a limiting block, and the other one thereof is provided with a limiting hole, the limiting block and the limiting hole being insertion-fitted to retain the auxiliary beam in a height direction.

Based on the solution noted *supra,* a first locking member is provided on the electric column, and a second locking member is further provided on the auxiliary beam, the first locking member rotates relative to the second locking member so as to be interlocked with the second locking member, whereby the auxiliary beam is limited by rotation.

Based on the solution noted *supra,* a power input end is provided on the electric column, and a power output end is provided on the main beam; and while the male part and the female part are insertion-fitted, electrical connection is established between the power input end and the power output end.

Based on the solution noted *supra,* a direction of insertion fit between the male part and the female part is consistent with a connection direction between the power input end and the power output end.

The present invention offers the following benefits:

The electric height-adjustable desk described herein comprises a desktop, a frame, and electric columns; the frame is configured to support the desktop and increase strength of the desktop so that the desktop is not easily deformed; the frame comprises a main beam and an auxiliary beam, the main beam and the auxiliary beam being capable of supporting the desktop; the electric columns are connected to the main beam so as to be capable of controlling lifting of the desktop.

Quick assembly between the main beam and the electric column is realized by insertion fit between the male part and the female part; the auxiliary beam is movable relative to the main beam so that after the fitting between the main beam and the electric column is completed, the male part and the female part are locked to main an insertion-fit state, whereby the main beam and the electric column are integrated. By locking the fit between the main beam and the electric column via the auxiliary beam, there eliminates a need to design an extra structure for the electric height-adjustable desk for locking the main beam and the electric column and also eliminates a need to deploy additional production lines and molds for the electric height-adjustable desk, which would otherwise increase of the manufacturing costs.

Furthermore, the auxiliary beam exerts a force against the male part and/or the female part to maintain the insertion-fit state therebetween. After the auxiliary beam moves relative to the main beam, a force may be exerted against the male part and/or the female part to increase the relative action force therebetween when they are in the insertion-fit state, whereby they are held at the insertion-fit state. Moreover, under the action of the auxiliary beam, no wobbling occurs between the electric column and the main beam so that the desktop maintains stable during use. In a case of disassembling the electric height-adjustable desk, it is only needed to operate the auxiliary beam to move in the opposite direction, the force exerted against the male part and/or the female part may be lifted.

Furthermore, the auxiliary beam exerts a force against the male part and/or the female part in a direction perpendicular to a direction of insertion fit between the male part and the female part to create fricative damping at an overlap portion therebetween. The auxiliary beam can increase the relative action force between the male part and the female part and thus may increase the static friction between the engaging surface therebetween in the insertion-fit direction of the two; the direction of the friction generated thereby is opposite the direction of releasing the insertion fit between the male part and the female part, thereby maintaining the insertion-fit state between the male part and the female part.

Furthermore, the male part is provided on an end portion of the electric column facing a rear side of the desktop, the male part and the female part being mated in a front-rear direction of the desktop; and the auxiliary beam exerts a force against the male part and/or the female part in a length direction of the main beam. During use, the desktop has a tendency of deformation, i.e., the central area of the desktop is recessed downward while the two ends thereof in the length direction are raised upward. After the male part and the female part are insertion-fitted, the female part limits the male part in the length direction of the main beam, which can prevent the two electric columns from skewing toward the outside of the desktop in the length direction of the main beam when a heavy object is loaded on the desktop.

Furthermore, the male part is provided on an end portion of the electric column facing a rear side of the desktop, the male part and the female part being mated in a front-rear direction of the desktop, the male part being an insert block, the female part being a slot, a size of the slot in a length direction of the main beam being greater than a size of the insert block; a check block is provided on the insert block, and a check recess fitted with the check block in the length direction of the main beam is provided on an inner wall of the slot; and the auxiliary beam exerts a force against the male part and/or the female part in the length direction of the main beam to maintain a fitted state between the check block and the check recess. After the male part and the female part are mated in the front-rear direction of the desktop, since the size of the slot in the length direction of the main beam is greater than the size of the insert block, the check block may be smoothly inserted into the slot during the process of inserting the insert block into the slot; moreover, when the male part and the female part are not locked by the auxiliary beam yet, the insert block is displaceable in the slot along the length direction of the main beam, so that the check block and the check recess are fitted; under the force exerted by the auxiliary beam, the male part and the female part are snugly fitted in the length direction of the main beam; when the male part and the female part maintain the insertion-fit state, the check block and the check recess can also maintain fit, limiting the electric columns and the main beam from relative displacement in the front-rear direction of the desktop.

Furthermore, the auxiliary beam is rotatably connected to the main beam, the auxiliary beam rotating to switch between a lock position where the auxiliary beam exerts a force against the male part and/or the female part and a release position where the force is released. Since the auxiliary beam is rotatable relative to the main beam, the auxiliary beam rotates to move close to or away from the electric column, which facilitates user operation.

Furthermore, a protrusion part is provided on the auxiliary beam, and when the auxiliary beam is disposed at the lock position, the force is exerted via the protrusion part against the male part and/or the female part to maintain an insertion-fit state therebetween. The auxiliary beam engages the male part and/or the female part via the protrusion part to exert a force against the male part and/or the female part; the protrusion part allows for the action force to concentrate on a smaller area, preventing excess dispersion of the action force, which would otherwise cause insufficient fitting strength between the male part and the female part.

Furthermore, a cam structure is further provided on the auxiliary beam, the cam structure being centered around a rotating center of the auxiliary beam, the protrusion part being formed by the cam structure. The cam structure may naturally form the protrusion part; in addition, the protrusion part formed by the cam structure has an arcuate profile, less likely causing damages to itself or to the male part or the female part. According to the lever principle, the closer the cam structure is to the rotating center, the less the action force the user needs to apply to switch the auxiliary beam to the lock position; in this solution, the center of the cam structure is the rotating center of the auxiliary beam, i.e., when the auxiliary beam rotates relative to the main beam, the cam structure rotates about its own axis; it is the most labor-saving solution to set the rotating center of the auxiliary beam as the center of the cam structure.

Furthermore, when the auxiliary beam is disposed at the release position, the auxiliary beam is retracted on the main beam in the length direction of the main beam. When the auxiliary beam is retracted on the main beam, the footprint of the frame may be reduced, which saves the packaging space needed for the frame and lowers the shipping cost.

Furthermore, the auxiliary beam comprises a first beam body arranged along the underside of the desktop and a second beam body extending from a side edge of the first beam body along a height direction; and when the auxiliary beam is disposed at the release position, the first beam body being at least partially projected on the main beam. When the auxiliary beam is disposed at the release position, the first beam body may at least partially overlap with the main beam, which further reduces the footprint of the frame. When the auxiliary beam is disposed at the lock position, the first beam body of the auxiliary beam may support the desktop in the front-rear direction of the desktop; the second beam body may enhance strength of the first beam body, causing the latter not bent easily.

Furthermore, when the auxiliary beam is disposed at the lock position, the auxiliary beam is locked to the electric column. The auxiliary beam at the lock position may lock the insertion-fit state between the male part and the female part; by locking the auxiliary beam to the electric column, the auxiliary beam may be held at the lock position to prevent the auxiliary beam from moving arbitrarily, which would otherwise cause relative displacement between the electric column and the main beam. In addition, after the auxiliary beam and the electric column are locked, the structural strength and stability of the desk frame can be further enhanced; during connecting between the auxiliary beam and the electric column, the electric column and the main beam are locked against relative movement, which also facilitates connection between the auxiliary beam and the electric column.

Furthermore, one of the electric column and the auxiliary beam is provided with a limiting block, and the other one thereof is provided with a limiting hole, the limiting block and the limiting hole being insertion-fitted to retain the auxiliary beam in a height direction. The limiting block and the limiting hole may be mated during the process of the auxiliary beam rotating to the lock position; after they are fitted, the hole wall of the limiting hole can abut against the limiting block to retain the auxiliary beam, preventing the auxiliary beam from displacing in the height direction and offsetting from the lock position.

Furthermore, a first locking member is provided on the electric column, and a second locking member is further provided on the auxiliary beam, the first locking member rotates relative to the second locking member so as to be interlocked with the second locking member, whereby the auxiliary beam is limited by rotation. The first locking member and the second locking member may be rotatably interlocked to retain the auxiliary beam to the lock position, preventing the auxiliary beam from rotating toward the release position to offset from the lock position.

Furthermore, a power input end is provided on the electric column, and a power output end is provided on the main beam; and while the male part and the female part are insertion-fitted, electrical connection is established between the power input end and the power output end. The main beam can also supply power to the electric column, which eliminates a need for independently connecting the electric column to a power supply; when the male part and the female part are fitted, electrical connection between the power input end and the power output end is established. The auxiliary beam may maintain electrical connection between the power input end and the power output end while maintaining the insertion-fit state between the male part and the female part.

These features and the advantages of the present invention will be described in detail through the example implementations below with reference to the accompanying drawings.

### BRIEF DESCRIPTION OF THE DRAWINGS

Hereinafter, the present invention will be further illustrated with reference to the accompanying drawings:
Fig. 1 is a structural schematic diagram of an electric height-adjustable desk in some implementations of the present invention;
Fig. 2 is a schematic diagram of fitting between an electric column and a frame in some implementations of the present invention;
Fig. 3 is a structural schematic diagram of the electronic column in some implementations of the present invention;
Fig. 4 is an enlarged schematic view of part A in Fig. 3;
Fig. 5 is an axonometric view of a main beam in some implementations of the present invention;
Fig. 6 is an enlarged schematic view of part B in Fig. 5;
Fig. 7 is a bottom view of the electric height-adjustable desk in some implementations of the present invention;
Fig. 8 is an enlarged schematic view of part C in Fig. 7;
Fig. 9 is an enlarged schematic view of part D in Fig. 7;
Fig. 10 is a structural schematic view of the main beam according to some implementations of the present invention;
Fig. 11 is a structural schematic view of a controller in some implementations of the present invention;
Fig. 12 is an exploded view of the main beam in some implementations of the present invention;
Fig. 13 is a sectional view of the main beam in some implementations of the present invention;
Fig. 14 is a bottom view of an electric height-adjustable desk with a cable organizer in some implementations of the present invention;
Fig. 15 is a structural schematic diagram of the frame when an auxiliary beam is at the release position in some implementations of the present invention; and
Fig. 16 is a schematic diagram of fitting between a male member and a female member in some implementations of the present invention.

In the drawings:
100 - desktop;
200 - frame; 201 - adaptor; 202 - rotary part; 203 - snap member; 210 - main beam; 211 - male part; 2111 - protrusion block; 2112 - check block; 2113 - through groove; 220 - auxiliary beam; 221 - female part; 2211 - recess; 2212 - check recess; 222 - protrusion part; 223 - cam structure; 224 - first beam body; 225 - second beam body; 230 - limiting hole; 240 - first chamber; 241 - first cavity; 242 - second cavity; 250 - second chamber; 260 - first rack; 270 - second rack;
300 - electric column; 301 - power input end; 310 - column body; 320 - bracket; 330 - foot; 340 - limiting block; 350 - first locking member;
400 - cable organizer;
500 - power take-off base; 510 - power adaptor;
600 - power take-off rail;
700 - controller; 701 - power output end; 710 - power interface; 720 - output interface; 730 - human-machine interaction interface;
800 - mounting base.

### DETAILED DESCRIPTION OF EMBODIMENTS

Hereinafter, the technical solutions in the implementations of the present invention will be explained and described with reference to the accompanying drawings; however, the implementations described infra are only example implementations of the present invention, not all of them. All other implementations derived by those skilled in the art based on the implementations described herein without exercise of inventive work shall all fall within the scope of protection of the present invention.

The terms such as "exemplary" and "some implementations" referred to hereinafter have meanings of "as an example, exemplary, or illustrative"; any implementation illustrated as "exemplary" shall not be interpreted as preferable to or better than another implementation. To illustrate the present application better, a plurality of details are provided in specific implementations described *infra,* but those skilled in the art shall understand the present application can also be implemented without such specific details.

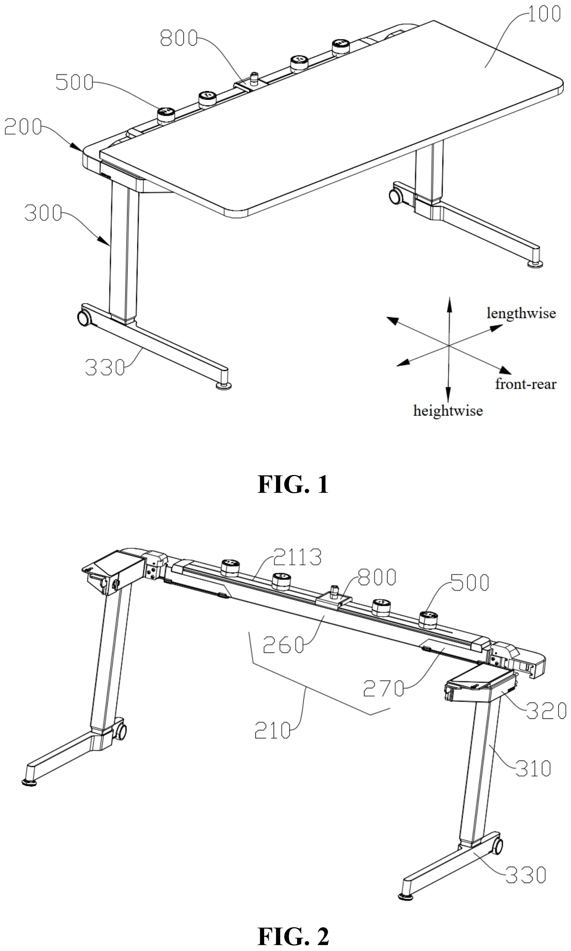

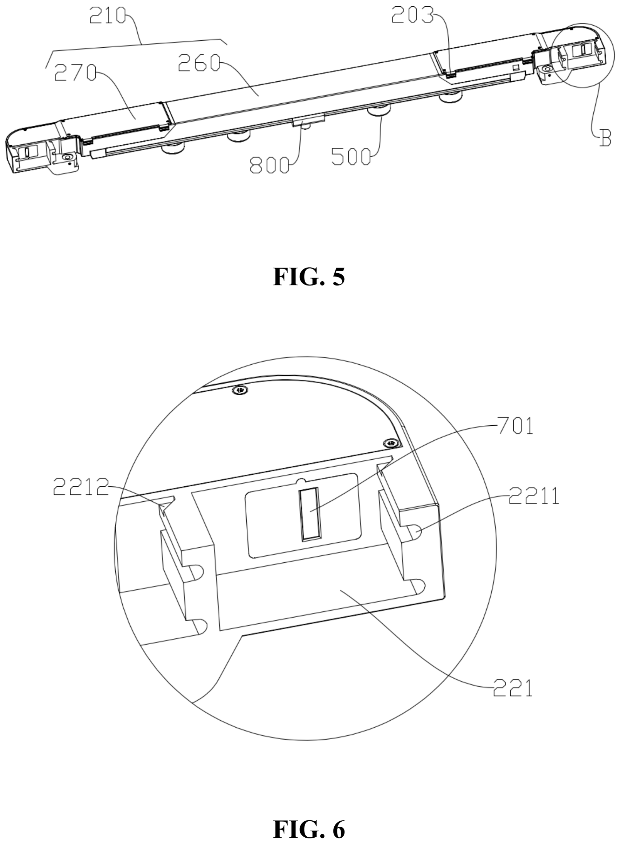

Referring to Figs. 1 to 8, an electric height-adjustable desk according to some implementations of the present invention comprises a desktop 100 and a desk frame supported underneath the desktop 100, the desk frame comprising a frame 200 and two electric columns 300 provided with a linear actuator. Specifically, the electric columns 300 each comprise a column body 310, a bracket 320 provided on an upper portion of the column body 300, and a foot 330 provided on a lower portion of the column body 310. The feet 300 are configured to support the entire electric height-adjustable desk on a ground surface. The column body 310 at least comprises an inner tube and an outer tube sleeved outside the inner tube. The linear actuator may drive the inner tube and the outer tube to move relatively in a height direction so that the electric columns 300 extend or retract to thereby control a height position of the desktop 100. The bracket 320 may increase stressed areas of the electric columns 300 to provide a stronger support to the desktop 100. In addition, in the bracket 320 may also be disposed an electric motor for the linear actuator. The frame 200 is connected between the two electric columns 300, which can maintain a constant distance between the two electric columns 300 so that the desktop 100 between the two electric columns 300 will not be deformed, whereby strength of the desktop 100 is enhanced.

In the present application, the frame 200 supports a lower surface of the desktop 100; the frame 200 partially bears a stress exerted by a load placed on the desktop 100, which increases bending stiffness of the desktop 100. The frame 200 comprises a main beam 210 and an auxiliary beam 220, the two electric columns 300 being connected to two ends of the main beam 210, respectively, the auxiliary beam 220 being connected between the main beam 210 and the desktop 100.

Exemplarily, the bracket 320 is securely connected to the desktop 100 via a bolt, and the auxiliary beam 220 is securely connected to the desktop 100 via a bolt. After the desk frame is completely assembled with the desktop 100, the main beam 210 supports the desktop 100 in a length direction of the desktop 100, and the auxiliary beam 220 supports the desktop 100 in a front-rear direction of the desktop 100. If the desktop is square, the length direction of the desktop refers to the left-right direction. Of course, the frame may also be directly connected between the column bodies or feet of the two electric columns.

In addition, the desk frame and the desktop may also be connected in such a manner that the bracket is securely connected to the desktop via a bolt while the auxiliary beam is connected to the bracket via a bolt, or the auxiliary beam is securely connected to the desktop via a bolt while the bracket is also securely connected to the auxiliary beam.

When the desk frame and the desktop 100 are completely assembled, the main beam 210 supports the desktop 100 in the length direction of the desktop 100, and the auxiliary beam 220 supports the desktop 100 in the front-rear direction of the desktop 100. If the desktop 100 is square, the length direction of the desktop 100 refers to the left-right direction. Of course, the frame 200 may also be directly connected between the column bodies 310 or feet 330 of the two electric columns 300.

To implement quick assembly/disassembly of the electric height-adjustable desk, the bracket 320 is provided with a male part 211, and the main beam 210 is correspondingly provided with a female part 221, the male part 211 and the female part 221 being insertion-fitted to connect the main beam 210 and the electric columns 300; this simple assembly manner facilitates user assembly/disassembly.

To enhance stability and fitting strength of the insertion fit therebetween, the electric height-adjustable desk further comprises a locking part, the locking part exerting a pressure against the female part 221 to enhance the relative acting force between the male part 211 and the female part 221 in the insertion-fit state, enabling the two to maintain the insertion-fit state. Moreover, under the action of the locking part, the electric columns 300 and the main beam 210 do not wobble relative to each other, thereby ensuring operating stability of the desktop 100. The locking part may also exert a pressure against the male part or against both of the male part and the female part.

The locking part comprises a pressing face, and the female part 221 comprises a pressed face; the pressing face exerts a force against the pressed face to maintain the insertion-fit state between the male part 211 and the female part 221; the locking part directly exerts a force against the female part 221 so that the locking force applied by the locking part can concentrate on the male part 211 and the female part 221, which effectively enhances the fitting strength therebetween.

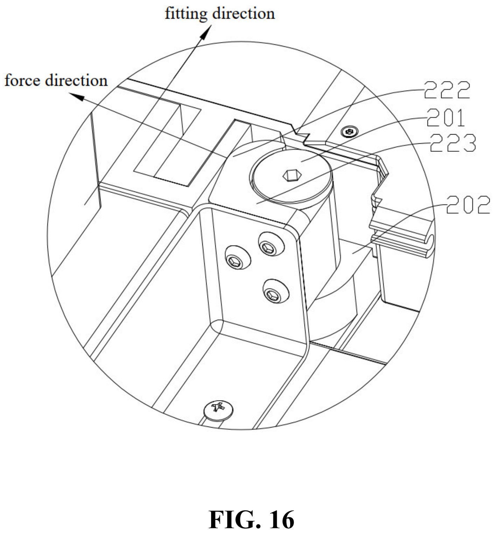

Referring to Fig. 16, in one implementation based on the implementation described *supra,* the male part 211 and the female part 221 are locked by friction; the locking part may increase the friction between the male part 211 and the female part 221 so as to realize locking therebetween.

The locking part exerts a force against the female part 221 in the direction perpendicular to insertion fit between the male part 211 and the female part 221 so as to maintain an insertion-fit state therebetween. As known from the friction formula, by setting the direction of force applied by the locking part to be perpendicular to the direction of insertion fit between the male part 211 and the female part 221, the friction increased on the overlap portion between the male part 211 and the female part 221 is maximized, whereby the fitting strength between the male part 211 and the female part 221 can be enhanced to the utmost extent.

If the direction of force applied by the locking part is not perpendicular to the direction of insertion fit between the male part and the female part, the direction of force has two component forces, i.e., a component force in the direction of insertion fit therebetween and a component force in the direction perpendicular to the direction of insertion fit therebetween, respectively; although the component force in the direction perpendicular to the direction of insertion fit therebetween may increase the fitting strength between the male part and the female part, the magnitude of this component force is smaller than the action force exerted by the locking part.

Exemplarily, the male part 211 is provided at an end portion of the bracket 320 facing a rear side of the desktop 100, the male part 211 and the female part 221 being mated in the front-rear direction of the desktop 100. During use, the desktop 100 has a tendency of deformation, i.e., the central area of the desktop 100 is recessed downward while the two ends thereof in the length direction are raised upward. After the male part 211 and the female part 221 are insertion-fitted, the female part 221 limits the male part 211 in the length direction of the main beam 210, which can prevent the two electric columns 300 from skewing toward the outside of the desktop 100 in the length direction of the main beam 210 when a heavy object is loaded on the desktop 100. The locking part applies a force against the female part 221 in the length direction of the main beam 210.

The male part 211 is an insert block, and the female part 221 is a slot; a protrusion block 2111 is provided on a side surface of the insert block along the front-rear direction of the desktop 100, and a recess 2211 fitted with the protrusion block 2111 is provided at a side wall of the slot along the front-rear direction of the desktop 100; after the insert block is inserted in the slot, fitting between the protrusion block 2111 and the recess 2211 may retain the electronic columns 300 and the main beam 210 in the height direction.

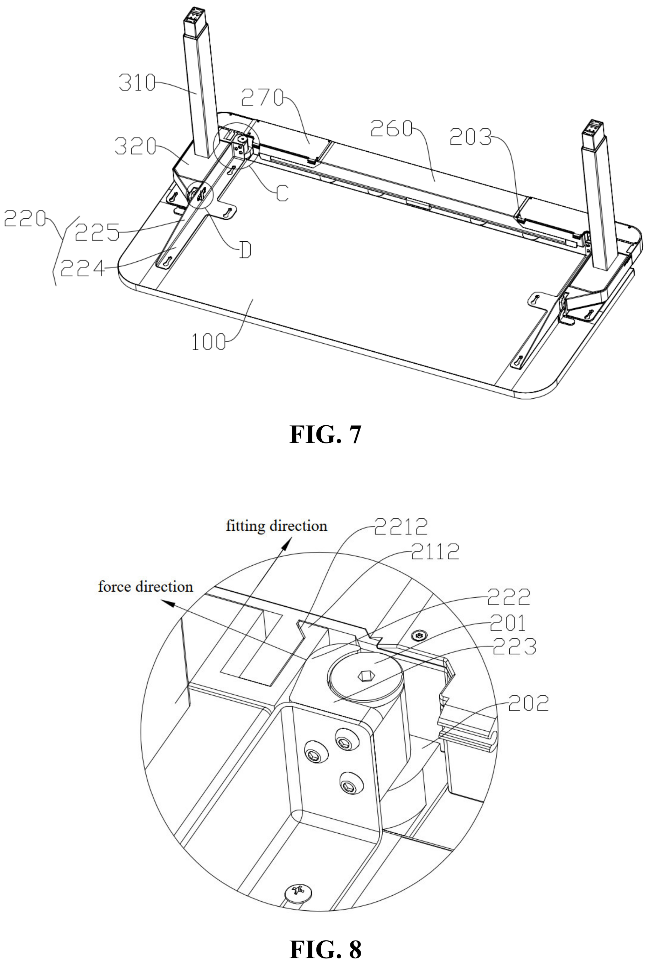

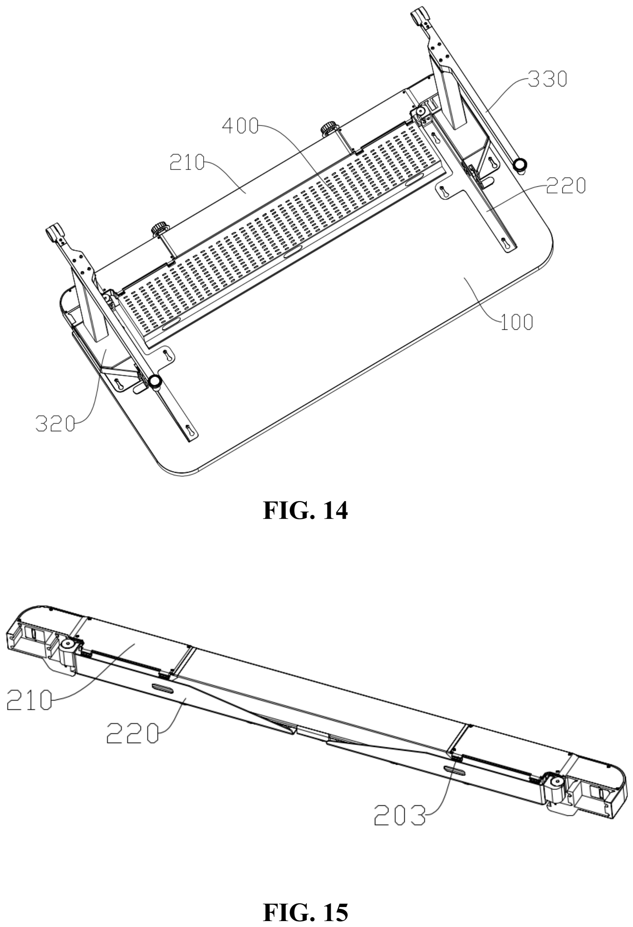

Referring to Figs. 7 to 9 and 15, in one implementation based on the implementation described *supra,* the locking part is exemplarily used as the auxiliary beam 220, the auxiliary beam 220 being movable relative to the main beam 210 so as to switch between a lock position where the male part 211 or the female part 221 receives a force and a release position where the force is released. By locking the fit between the main beam 210 and the electric column 300 via the auxiliary beam 220, there eliminates a need to design an extra structure to the electric height-adjustable desk for locking the main beam 210 and the electric column 300, and thus eliminates a need to deploy additional production lines and molds for the electric height-adjustable desk, which would otherwise increase the manufacturing costs. Since the auxiliary beam 220 is movable relative to the main beam 210, it may be held at the release position during a process of assembling the electric column 300 and the main beam 210 so as not to interfere with fitting between the electric column 300 and the main beam 210. As illustrated in Fig. 7, the auxiliary beam is disposed at the lock position, and in Fig. 15, the auxiliary beam is disposed at the release position.

Referring to Figs. 7 to 9, in another implementation of the present invention based on the implementation described *supra,* the size of the slot in the length direction of the main beam 210 is greater than that of the insert block; a check block 2112 is provided on the insert block, and a check recess 2212 fitted with the check block 2112 in the length direction of the main beam 210 is provided on an inner wall of the slot. During the process of inserting the insert block in the slot, the check block 2112 may be smoothly inserted into the slot; and when the male part 211 and the female part 221 are not locked by the auxiliary beam 220, displacement of the insert block in the slot along the length direction of the main beam 210 allows for the check block 2112 and the check recess 2212 to fit with each other; under the force applied by the auxiliary beam 220, the male part 211 and the female part 221 are snugly fitted in the length direction of the main beam 210; while the male part 211 and the female part 221 maintain the insertion-fit state, the check block 2112 and the check slot 2212 can also maintain a fit with each other, thereby limiting relative displacement between the electric columns 300 and the main beam 210 in the front-rear direction of the desktop 100.

In addition, when the check block 2112 and the check slot 2212 are fitted, the male part 211 and the female part 221 may abut against each other to create a static friction in the insertion-fit direction, which enhances fitting strength.

Referring to Figs. 7 and 8, in one implementation of the present invention based on the implementation described *supra,* a protrusion part 222 is provided on the auxiliary beam 220; when the auxiliary beam 220 is disposed at the lock position, the protrusion part 222 applies a force against the female part 221 to maintain the insertion-fit state therebetween. The auxiliary beam 220 contacts the female part 221 via the protrusion part 222 to thereby apply a force against the female part 221; the protrusion part 222 may play a role of concentrating the action force on a smaller area to prevent excess dispersion of the action force causing insufficient fitting strength between the male part 211 and the female part 221 and also prevent the action force from being applied to other parts than the male part 211 and the female part 221.

The auxiliary beam 220 is rotatably connected to the main beam 210 so as to switch between the lock position where the female part 221 receives a force and a release position where the force is released. A cam structure 223 is further provided on the auxiliary beam 220, the cam structure 223 being centered around the rotating center of the auxiliary beam 220. The protrusion part 222 is formed by the cam structure 223, the cam structure 223 being an eccentrical structure which may naturally form the protrusion part 222; in addition, the protrusion part 222 formed by the cam structure 223 has an arcuate profile, less likely causing damages to itself or to the male part 211 or the female part 221. According to the lever principle, the closer the cam structure 223 is to the rotating center, the less the action force the user needs to apply to switch the auxiliary beam 220 to the lock position; in this solution, the center of the cam structure 223 is the rotating center of the auxiliary beam 220, i.e., when the auxiliary beam 220 rotates relative to the main beam 210, the cam structure 223 rotates about its own axis; it is the most labor-saving solution to set the rotating center of the auxiliary beam 220 as the center of the cam structure 223.

One end of the auxiliary beam 220 is rotatably connected to the main beam 210, and another end thereof extends towards a front side of the desktop 100; in addition, only one auxiliary beam 220 is provided at each of the two ends of the main beam 210 so that the auxiliary beam 220 is not exposed outside the desktop 100; since the auxiliary beam 220 only has one end connected to the main beam 210, when the auxiliary beam 220 is disposed at the release position, the end of the auxiliary beam 220 proximal to the main beam 210 does not project beyond the end of the main beam 210, which does not increase the overall length and thusly does not increase the packaging and shipping costs.

When the auxiliary beam 220 is disposed at the release position, the auxiliary beam 220 is retracted on the main beam 210 along the length direction of the main beam 210, which may reduce the footprint of the frame 200, save the packaging space needed for the frame 200, and lower the shipping cost. The auxiliary beam 220 comprises a first beam body 224 arranged along the underside of the desktop 100 and a second beam body 225 extending from a side edge of the first beam body 224 along the height direction; when the auxiliary beam 220 is disposed at the release position, the second beam body 225 is snugly attached to a side surface of the main beam 210, and projection of the first beam body 224 is partially located on the upper surface of the main beam 210; this may limit the size of the second beam body 225 projects from a side portion of the main beam 210 when being retracted on the main beam 210, thereby reducing the packaging cost and shipping cost of the main beam 210 to the utmost extent.

A rotary part 202 configured to mount an adaptor 201 is formed on a recessed area of a second rack 270, the auxiliary beam 220 being rotatably connected to the main beam 210 via the adaptor 201; the adaptor 201 slightly protrudes from a side portion of the second rack 270 so that when the auxiliary beam 220 is retracted onto the main beam 210, the second beam body 224 is snugly attached to a side surface of the main beam 210; in this case, the overall width of the frame 200 is slightly greater than the width of the main beam 210.

When the auxiliary beam 220 is disposed at the lock position, the auxiliary beam 220 is locked on the electric column 300; the auxiliary beam 220 at the lock position may lock the male part 211 and the female part 221 to the insertion-fit state; by locking the auxiliary beam 220 to the electric columns 300, the auxiliary beam 220 may be held at the lock position to prevent the auxiliary beam 220 from moving arbitrarily causing displacement of the electric columns 300 relative to the main beam 210. After the auxiliary beam 220 is locked to the electric column 300, the frame 200 may be integrated with the electric column 300, which enhances structural strength and stability of the desk frame and also enhances the support effect of the desk frame against the desktop 100; during the process of connecting between the auxiliary beam 220 and the electric column 300, since the electric column 300 and the main beam 210 are locked from movement relative to each other, the connection between the auxiliary beam 220 and the electric column 300 is facilitated, which also enables secure connection between the bracket 320 and the desktop 100.

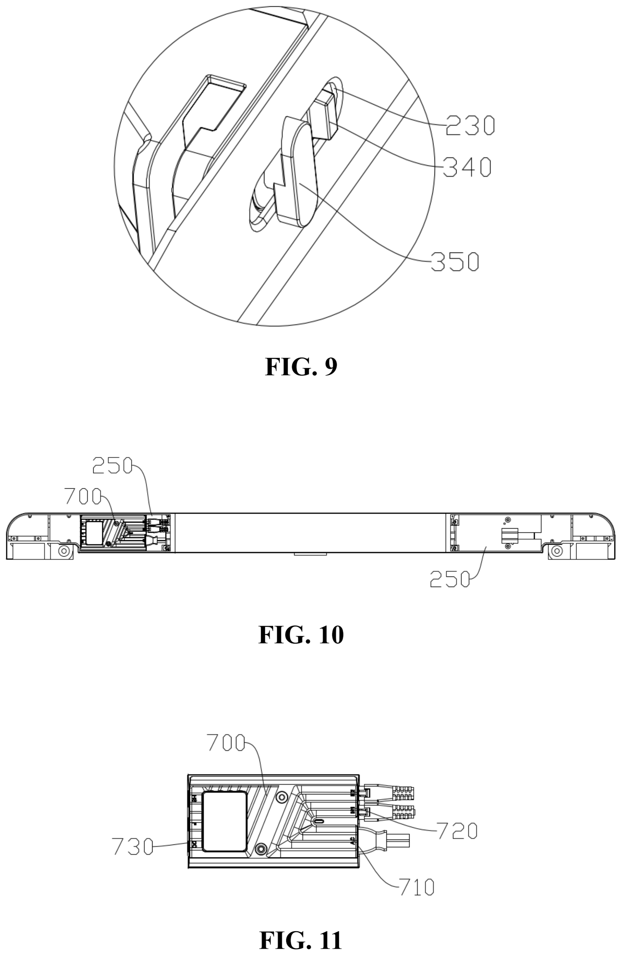

Referring to Fig. 9, in one implementation of the present invention based on the implementation described *supra,* a limiting block 340 is provided on the electric column 300, and a limiting hole 230 is provided on the auxiliary beam 220, the limiting block 340 being insertion-fitted with the limiting hole 230 so as to retain the auxiliary beam 220 in the height direction; while the auxiliary beam 220 is rotating to the lock position, the limiting block 340 and the limiting hole 230 may be mated; after the fitting therebetween is completed, the hole wall of the limiting hole 230 can abut against the limiting block 340 to retain the auxiliary beam 220, preventing the auxiliary beam 220 from being displaced in the height direction which would otherwise cause offset from the lock position. Of course, it may be understood that the positions of the limiting block 340 and the limiting hole 230 may be swapped with each other, which can also achieve the same technical effect.

A first locking member 350 is provided on the electric column 300, and a second locking member is further provided on the auxiliary beam 220, the first locking member 350 being rotatable relative to the second locking member so as to be interlocked with the second locking member to rotate to limit the auxiliary beam 220; the first locking member 350 is rotatably mounted on the electric column 300, and the second locking member is the limiting hole 230 noted *supra;* the first locking member 350 passes through the limiting hole 230 when the auxiliary beam 220 is disposed at the lock position; after rotation of the first locking member 350, a part thereof passing through the limiting hole 230 may be re-oriented to abut against the auxiliary beam 220 around the limiting hole 230 so as to stop the auxiliary beam 220 from rotating towards the release position.

The electric height adjustable desk according to the present invention further offers a power supply feature; a first power take-off module and a second power take-off module are provided on the main beam 210, the first power take-off module being configured to supply power to an electrical component for the electric height-adjustable desk, the second power take-off module being configured to supply power to an external device other than the electrical component for the electric height-adjustable desk.

In the implementations described *supra,* the electrical component for the electric height-adjustable desk refers to a component used by the electric height-adjustable device itself, e.g., a series of electrical components including a linear actuator of the electric columns 300, an ambient lamp embedded in the desktop 100, and a human-machine interaction unit controlling the two electric columns 300. The external device other than the electrical component for the electric height-adjustable desk refers to a device placed on the desktop of the electric height-adjustable desk in use or a device peripheral to the electric height-adjustable desk, e.g., devices such as a display and a humidifier placed on the desktop, and devices such as a fan and a computer host peripheral to the electric height-adjustable desk.

In some existing electric height-adjustable desks, their controller can not only supply power to the lifting columns, but can also be connected to an external power supply module to supply power to some external devices. However, since the controller outputs direct-current (DC) electricity, the controller and the external power supply module connected to the controller are both used to supply power to a DC device. Different from the conventional technologies, the second power take-off module on the electric height-adjustable desk according to the present application may be independently connected to the power grid; since the home grid generally supplies 220V AC (alternating-current) electricity, a power take-off base 500 connected to the second power take-off module via a cable is further configured on the main beam 210, so that the second power take-off module may supply 220V AC electricity to the external device via the power take-off base 500. When the external device takes power from the second power take-off module, it does not affect normal operation of the first power take-off module, thereby not affecting the voltage magnitude supplied by the first power take-off module to the linear actuator. Likewise, the first power take-off module does not cause fluctuation of the voltage supplied by the second power take-off module to the external device and thus does not affect normal operation of the device. In addition, by using the power take-off base 500 to supply power to the external devices, there eliminates a need of extra connection to a power strip, which thus reduces the number of cables, rendering the desktop 100 more tidy.

In this implementation, the independent connection to the power grid refers to directly taking power from the power grid, where the current from the power grid is not subjected to any processing by an intermediate device during the connection process. Exemplarily, the device is either directly connected to an outlet via a plug, or connected to a power strip via a plug while the plug of the power strip is connected to the outlet.

The first power take-off module and the second power take-off module take power in a plurality of manners, as described *infra:*

The first power take-off module is electrically connected to the second power take-off module, the second power take-off module is connected to the outlet via the plug to thereby independently connect to the power grid, the second power take-off module can supply 220V AC electricity to the first power take-off module, and the first power take-off module may process the 220V AC electricity to supply power to the electrical component of the electric height-adjustable desk; or, the first power take-off module and the second power take-off module are both directly connected to the power grid; or, a current collection module is provided on the main beam, the current collection module being connected to the power grid, the first power take-off module and the second power take-off module being electrically connected to the current collection module.

Referring to Figs. 1, 2, 7, and 14, in one implementation of the present invention based on the implementation described *supra,* to facilitate connecting the power take-off base 500 and an external device by the user, the main beam 210 extends at least partially beyond a side surface of the desktop 100 to expose the power take-off base 500 outside the desktop 100; this eliminates a need for the user to bend down under the desktop 100 to connect the external device to the power take-off base 500 during use. In order not to affect use by the user, the power take-off base 500 is exposed out of the rear side of the desktop 100. Since the auxiliary beam 220 only has one end connected to the main beam 210, when the auxiliary beam 220 is disposed at the lock position, the frame 200 has a " 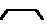 " shape, and the main beam 210 may completely extend outside of the desktop 100 so that it is connected to the desktop 100 only via the auxiliary beam 220; of course, the main beam 210 may also be set to a " 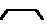 " shape, with its structure being partially disposed under the desktop 100 while the rest part thereof being disposed outside the desktop 100.

Since the auxiliary beam 220 at the lock position is locked tightly to the electric column 300, the frame 200 and the electric column 300 may be formed of a unitary structure; therefore, even if the main beam 210 extends outside the desktop 100, the frame 200 can also enhance the support performance of the desktop 100.

The two auxiliary beams 220 may be located in an area between the two electric columns 300; and the two electric columns 300 may also be disposed between the two auxiliary beams 220.

The frame 200 may enclose an area underneath the desktop 100 for mounting a cable organizer 400; the cable organizer 400 is disposed at the side proximal to the main beam 210, and the cable connected to the power take-off base 500 may be arranged on the cable organizer 400. The cable organizer 400 may be detachably connected to the frame 200 or the desktop 100. A snap member 203 is provided on the main beam 210 of the frame 200, an edge of the cable organizer 400 being snap-fitted on the snap member 203.

In addition, a partial structure of the rear side of the desktop may also be set as a hollowed portion so that the area on the main beam where the power take-off base is disposed is exposed to the outside.

In addition, a through portion may also be provided on the desktop; the through portion is not required to align with the power take-off base; the cable of the external device may pass through the desktop via the through portion so as to be electrically connected to the power take-off base underneath the desktop, which eliminates a need of making a detour around a side portion of the desktop, thereby facilitating using the external device.

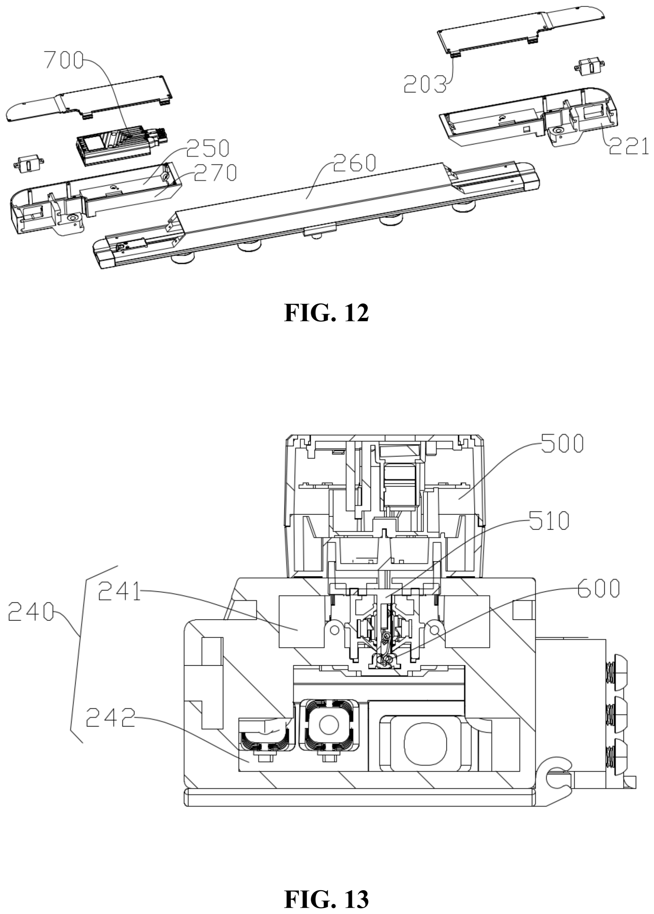

Referring to Fig. 13, in one implementation of the present application based on the implementation described *supra,* the power take-off base 500 may be movably mounted on the main beam 210 so as to adjust its own position on the main beam 210 based on the position of the external device, preventing messy cable routing on the desktop while facilitating using an external device with a shorter power cable.

The power take-off base 500 maintains electrical connection to the second power take-off module during movement, eliminating a need of temporarily shutting down the external device when adjusting the position of the power take-off base 500, which does not affect normal use of the external device while ensuring user experience.

Specifically, the second power take-off module comprises a power take-off rail 600 disposed in the main beam 210 along the length direction of the main beam 210, and a through groove 2113 is provided on the main beam 210 along its length direction; the power take-off base 500 comprises a power adaptor 510 through the through groove 2113 to take power from the power take-off rail 600, the power adaptor 510 being slidingly fitted with the power take-off rail 600 and taking power by contact with the latter, which ensures power output during movement of the power take-off base 500.

Or, a power take-off part is arranged on the surface of the main beam 210 along the length direction of the latter, the power take-off rail 600 being disposed in the main beam 210 and electrically connected to the power take-off part, the power take-off base 500 and the power take-off part contacting for power take-off.

Referring to Figs. 10 to 12, in one implementation of the present application based on the implementation described *supra,* the first power take-off module comprises a controller 700, the controller 700 having a power interface 710 and two output interfaces 720, the power interface 710 being connected to the power grid, the two output interfaces 720 being electrically connected to linear actuators of the two electric columns 300, respectively.

An AC-DC conversion module is provided in the controller 700; preferably, the power interface 710 is electrically connected to the second power take-off module for power take-off; the second power take-off module supplies AC electricity to the controller 700; the AC-DC conversion module can convert AC electricity to DC electricity to supply to the linear actuator via the output interface 720.

The controller 700 further comprises a human-machine interaction interface 730, a human-machine interaction unit being electrically connected to the human-machine interaction interface 730; the human-machine interaction unit takes power from the human-machine interaction interface 730 and establishes interaction with the linear actuator to control a lifting movement of the electric columns 300.

The human-machine interaction unit and the linear actuator operate under different voltages. The human-machine interaction unit operates under 3V ~ 5V, while the linear actuator operates under at least 12V~40V. The controller 700 further comprises a first power supply circuit supplying a first working voltage to the output interface 720 and a second power supply circuit supplying a second working voltage to the human-machine interaction interface 730.

The controller 700 further comprises a main control unit, the main control unit being connected to the output interface 720 and the human-machine interaction interface 730, for establishing signal interaction between the human-machine interaction unit and the electric column 300; the main control unit is connected to the output interface 720 to establish interaction with two linear actuators; the main control unit is further connected to the human-machine interaction interface 730 to establish interaction with the human-machine interaction unit so that the human-machine interaction interface 730 and the linear actuator establish signal interaction via the main control unit.

Since the controller 700 has a large size while the power take-off rail 600 also needs to occupy a certain space, as illustrated in Figs. 10 to 12, in one implementation based on the implementation described *supra,* the main beam 210 further comprises a first chamber 240 and two second chambers 250 disposed at two ends of the first chambers 240 respectively, the controller 700 being disposed in one of the second chambers 250, the power take-off rail 600 being disposed in the first chamber 240. By disposing the controller 700 and the second power take-off module in two chambers, respectively, they do not interfere with each other.

The two second chambers 250 are disposed at two ends of the first chamber 240, respectively, so as to be close to the electric columns 300. The linear actuator of one electric column 300 may be directly electrically connected to the controller 700; the other electric column 300 and the controller 700 are spaced by the first chamber 240; a cable of the linear actuator needs to pass through the first chamber 240 into the second chamber 250 where the controller 700 is disposed so that the linear actuator is electrically connected to the controller 700. The first chamber 240 provides a cable routing space where one of the output interfaces 720 is electrically connected the linear actuator; this facilitates electrical connection between the two electric columns 300 and the controller 700.

In the implementation described *supra,* the first chamber 240 comprises a first cavity 241 and a second cavity 242 which are spaced apart from each other, the power take-off rail 600 being disposed in the first cavity 241, the second cavity 242 defining a cable routing space and communicating with the two second chambers 250; the cable routing space defined by the second cavity 242 communicates with the two second chambers 250, respectively, so that the cable of one electrical column 300 may pass through the second chamber 250 and the second cavity 242 sequentially to enter the other second chamber 250; and since the first cavity 241 and the second cavity 242 are spaced apart, the power take-off rail 600 disposed in the first cavity 241 and the cable passing through the second cavity 242 do not interfere with each other.

The second cavity 242 is disposed between the two second chambers 250, the second chambers 250 at least partially overlapping with the second cavity 242 to facilitate electrical connection between the controller 700 and the two electric columns 300.

Referring to Figs. 7 and 12, in one implementation of the present invention based on the implementation described *supra,* the main beam 210 further comprises a first rack 260 and two second racks 270 connected to two ends of the first rack 260, respectively. The first rack 260 defines the first chamber 240, and the second racks 270 define the second chambers 250, respectively. The electric columns 300 are connected to end portions of the second racks 270, respectively. After one of the two second racks 270 in which the controller 700 is disposed is assembled with the electric column 300, an electrical connection therebetween may be directly established via the second chamber 250; after the other one of the second racks 270 is assembled with the electric column 300, the electric column 300 can be electrically connected to a cable on the controller 700 which passes through the first chamber 240 into the second chamber 250.

If the two second chambers 250 and the first chamber 240 are all arranged on the first rack 260, cables of the two electric columns 300 need to pass through the second rack 270 so as to establish electrical connection with the controller 700; the solution provided in this implementation facilitates electrical connection between the two electric columns 300 and the controller 700.

The first rack 260 and the second rack 270 are split pieces; they can be fixedly connected via fasteners. The first power take-off module and the second power take-off module may be first arranged in the first rack 260 and the second rack 270, respectively, and then the first rack 260 and the second rack 270 are assembled; the fasteners may be connecting members such as screws and bolts. In addition, the length of the first rack 260 may also be selected based on the electric height-adjustable desk, which improves universality of the second rack 270.

The first rack 260 and the second rack 270 partially overlap in the length direction of the main beam, i.e., the second cavity 242 and the second chamber 250 partially overlap, and the overlap portions of the first rack 260 and the second rack 270 are also fixedly connected via fasteners; the first rack 260 and the second rack 270 have a large contact area to enhance fitting stability and overall strength of the main beam 210. The controller 700 is provided in a portion of the second rack 270 overlapping with the first rack 260; this design can effectively utilize the space in the main beam 210 to reduce the length of the main beam 210.

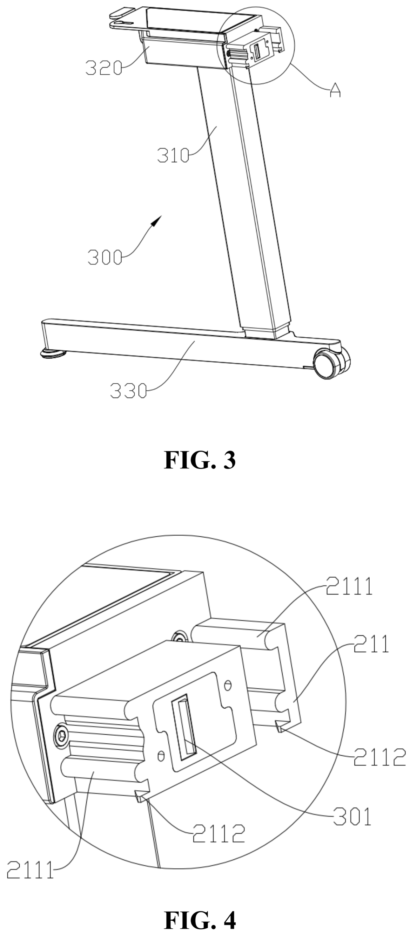

Referring to Figs. 3 to 6, in one implementation of the present invention based on the implementation described *supra,* the electric column 300 is provided thereon with a power input end 301, and the first power take-off module further comprises a power output end 701, the controller 700 being electrically connected to the power output end 701. When the electric column 300 is assembled with the main beam 210, the power input end 301 and the power output end 701 establish electrical connection in the meanwhile. The power input end 301 and the power output end 701 are fitted during assembly between the electric column 300 and the main beam 210, which facilitates establishing electrical connection between the linear actuator and the first power take-off module. While the power input end 301 and the power output end 701 are electrically connected, the electrical connection between the controller 700 and the linear actuator is also established.

Power transmission between the power input end 301 and the power output end 701 may adopt one of contact power take-off, plug-in power take-off, and electromagnetic coupling-type power take-off.

Exemplarily, the direction of insertion fit between the electric column 300 and the main beam 210 is consistent with the connection direction between the power input end 301 and the power output end 701; during connection between the electric column 300 and the main beam 210, the power input end 301 and the power output end 701 may gradually approach to each other, and the power input end 301 and the power output end 701 are fitted upon completion of connection between the electric column 300 and the main beam 210. Since fitting between the power input end 301 and the power output end 701 is performed synchronously with fitting between the electric column 300 and the main beam 210, assembly of the electric height-adjustable desk is facilitated.

In one implementation of the present invention based on the implementation described *supra,* the power take-off base is configured with outlet holes that can supply AC voltage to external devices such as a fan and a display; of course, an AC-DC conversion module may also be provided inside the power take-off base so that the outlet holes can output a DC voltage.

In addition, the power take-off base may also be configured with a USB port or a wireless charging module. The USB port can provide a DC voltage to an external device such as a mobile phone and a smart watch; and the wireless charging module can supply power to an external device having a wireless charging feature.

A plurality of power take-off bases may be provided, so that the main beam 210 offers three power take-off manners: outlet holes, USB port, and wireless charging module.

Referring to Figs. 1 and 2, in one implementation of the present invention based on the implementation described *supra,* a mounting base 800 configured to mount an external device is further provided on the main beam 210. An external device may be mounted on the main beam 210 via the mounting base 800 to thereby reduce the footprint of external device on the desktop 100, which enhances user experience and also prevents the external device from easily falling off from the electric height-adjustable desk when being subjected an external force.

The mounting base 800 is movably disposed on the main beam 210, realizing flexible adjustment of the position of the external device. The mounting base 800 is provided thereon with a locking device operable by the user to secure the mounting base 800 on the main beam 210, thereby limiting the mounting base 800 from being displaced.

What have been described above are only example embodiments of the present invention; however, the protection scope of the present invention is not limited thereto. A person skilled in the art should understand that the disclosure includes, but is not limited to, the contents described in the drawings and the embodiments. Any modifications without departing from the functions and structural principles of the disclosure will be included within the scope of the claims.

## Claims

1. An electric height-adjustable desk, comprising:
a desktop;
a desk frame comprising a frame and two electric columns, the frame comprising a main beam and an auxiliary beam, the two electric columns being connected to two ends of the main beam, respectively, the auxiliary beam being connected between the main beam and the desktop;
wherein:
a male part is provided on each electric column, and a female part insertion-fitted with the male part is provided on the main beam, the male part being insertion-fitted with the female part to connect the electric column to the main beam; and the auxiliary beam is movable relative to the main beam, the auxiliary beam being configured to lock the male part and/or the female part to an insertion-fit state.

2. The electric height-adjustable desk according to claim 1, wherein the auxiliary beam exerts a force against the male part and/or the female part to maintain the insertion-fit state therebetween.

3. The electric height-adjustable desk according to claim 2, wherein the auxiliary beam exerts a force against the male part and/or the female part in a direction perpendicular to a direction of insertion fit between the male part and the female part to create fricative damping at an overlap portion therebetween.

4. The electric height-adjustable desk according to claim 3, wherein the male part is provided on an end portion of the electric column facing a rear side of the desktop, the male part and the female part being mated in a front-rear direction of the desktop; and the auxiliary beam exerts a force against the male part and/or the female part in a length direction of the main beam.

5. The electric height-adjustable desk according to claim 2, wherein the male part is provided on an end portion of the electric column facing a rear side of the desktop, the male part and the female part being mated in a front-rear direction of the desktop, the male part being an insert block, the female part being a slot, a size of the slot in a length direction of the main beam being greater than a size of the insert block; a check block is provided on the insert block, and a check recess fitted with the check block in the length direction of the main beam is provided on an inner wall of the slot; and the auxiliary beam exerts a force against the male part and/or the female part in the length direction of the main beam to maintain a fitted state between the check block and the check recess.

6. The electric height-adjustable desk according to claim 1, wherein the auxiliary beam is rotatably connected to the main beam, the auxiliary beam rotating to switch between a lock position where the auxiliary beam exerts a force against the male part and/or the female part and a release position where the force is released.

7. The electric height-adjustable desk according to claim 6, wherein a protrusion part is provided on the auxiliary beam, and when the auxiliary beam is disposed at the lock position, the force is exerted via the protrusion part against the male part and/or the female part to maintain an insertion-fit state therebetween.

8. The electric height-adjustable desk according to claim 7, wherein a cam structure is further provided on the auxiliary beam, the cam structure being centered around a rotating center of the auxiliary beam, the protrusion part being formed by the cam structure.

9. The electric height-adjustable desk according to claim 6, wherein when the auxiliary beam is disposed at the release position, the auxiliary beam is retracted on the main beam in the length direction of the main beam.

10. The electric height-adjustable desk according to claim 9, wherein the auxiliary beam comprises a first beam body arranged along the underside of the desktop and a second beam body extending from a side edge of the first beam body along a height direction; and when the auxiliary beam is disposed at the release position, the first beam body being at least partially projected on the main beam.

11. The electric height-adjustable desk according to claim 6, wherein when the auxiliary beam is disposed at the lock position, the auxiliary beam is locked to the electric column.

12. The electric height-adjustable desk according to claim 11, wherein one of the electric column and the auxiliary beam is provided with a limiting block, and the other one thereof is provided with a limiting hole, the limiting block and the limiting hole being insertion-fitted to retain the auxiliary beam in a height direction.

13. The electric height-adjustable desk according to claim 11, wherein a first locking member is provided on the electric column, and a second locking member is further provided on the auxiliary beam, the first locking member rotates relative to the second locking member so as to be interlocked with the second locking member, whereby the auxiliary beam is limited by rotation.

14. The electric height-adjustable desk according to claim 1, wherein a power input end is provided on the electric column, and a power output end is provided on the main beam; and while the male part and the female part are insertion-fitted, electrical connection is established between the power input end and the power output end.

15. The electric height-adjustable desk according to claim 14, wherein a direction of insertion fit between the male part and the female part is consistent with a connection direction between the power input end and the power output end.
